# EUROPEAN PATENT SPECIFICATION

(11) **EP 2 878 119 B1**
(45) Date of publication and mention of the grant of the patent: **30.08.2017**
(21) Application number: 13750355.3
(22) Date of filing: 25.07.2013
(51) Int. Cl.: H04N 5/225

(54) **LASER EVENT RECORDER**
LASERVORFALLAUFNEHMER
ENREGISTREUR D'INCIDENT LASER

(30) Priority: 25.07.2012 GB 201213191; 10.01.2013 GB 201300411
(43) Date of publication of application: 03.06.2015
(73) Proprietor: The Secretary of State for Defence, Salisbury, Wiltshire SP4 0JQ (GB)
(72) Inventor: McEWAN, Kenneth, John, Salisbury Wiltshire SP4 0JQ (GB); WILLIAMSON, Craig, Salisbury Wiltshire SP4 0JQ (GB)
(74) Representative: Farnsworth, Alastair Graham
(86) International application number: PCT/GB2013/000324
(87) International publication number: WO 2014/016546

(56) References cited:
- WO-A2-2006/127840
- US-A1- 2008 149 813
- Craig R. Schwarze ; Robert M. Vaillancourt ; David L. Carlson ; Michael Hercher and James R. Engel: "Laser event recorder", Airborne Intelligence, Surveillance, Reconnaissance (ISR) Systems and Applications , vol. 5409 30 August 2004 (2004-08-30), pages 120-127, XP002714970, Retrieved from the Internet: URL:http://proceedings.spiedigitallibrary. org/proceeding.aspx?articleid=843729 [retrieved on 2013-10-18]

## Description

### Technical Field of the Invention

The invention relates to a laser event recorder and laser event recording system.

### Background to the Invention

Civilian and military aircraft are increasingly being targeted by high power laser pointers, which can cause a visual distraction to pilots with the potential to cause mass fatalities. At least 2,000 separate laser events affecting UK-registered aircraft were reported to the Civil Aviation Authority (CAA) during 2011. This is increasing sharply year-on-year, with similar trends being seen around the world.
It would therefore be desirable to provide equipment to help record and/or counter such laser incidents.

A known laser recorder available from OPTRA, Inc. of Massachusetts, USA, (Craig, R, Schwarze et al. "Laser event recorder", Airborne Intelligence, Surveillance, Reconnaissance (ISR) Systems and Applications) comprises specialist optics to enable measurement of energy, wavelength, and temporal characteristics of laser operating in the visible to near IR regime. The laser recorder provides instant real-time feedback and a compact flash card record of laser events.
However, the known laser recorder is less than perfect for aviation recording purposes since the information that it records may not be accessible anymore in the event of a crash. Aircraft are typically fitted with "black box" flight recorders for crash analysis purposes, however these are typically fixed within the aircraft's systems and are not accessible to un-regulated external electronic devices. Access to the information recorded by the laser recorder would be particularly important in the event that the crash was partly caused by a laser event.
Furthermore, the above known laser recorder is a specialist piece of equipment which may not be readily available to pilots.
It is therefore an aim of the invention to improve upon the known laser recorder.

### Summary of the Invention

According to a first aspect of the invention, there is provided a laser event recorder comprising an image sensor, a processing unit coupled to the image sensor, and a wireless transceiver coupled to the processing unit. The processing unit is configured to identify when the image sensor is illuminated by a laser when a predetermined number of adjacent image sensor pixels are saturated; in response to the identification, record a laser event comprising at least one characteristic feature of the laser; and send the recorded laser event to a central server using the wireless transceiver.

The ability to transmit the recorded laser event to a central server by wireless communication means that the laser event will be available for subsequent analysis, even if the laser event recorder itself is subsequently destroyed in a crash.

Furthermore, the use of a central server for receiving recorded laser events means that laser events recorded by multiple laser event recorders may all be accessed from the central server for analysis. Therefore, in the event of a crash the relevant recorded laser events may be easily identified using the central server, which would not be the case if every laser event recorder was to have its own separate storage system that was unknown to any central point of access.

Advantageously, the laser event recorder may further comprise a navigational positioning system receiver, for example a GPS receiver. The processing unit may be configured to store a location determined by the navigational positioning system receiver at the time of the identification as part of the recorded laser event. Accordingly, the recorded laser event can be analysed with reference to the location where the laser event took place. The location may optionally include altitude, as well as latitude and longitude.

The laser event recorder may further comprise a compass capability, using a compass and/or positional tracking information. The processing unit may be further configured to store an orientation and/or heading determined by the compass capability at the time of the identification as part of the recorded laser event. The compass may provide information on the orientation of the laser event recorder, and the positional tracking information may provide information on the heading of a vehicle such as a plane in which the laser event recorder is being used.
The processing unit may be configured to store a time of the identification as part of the recorded laser event, so that the recorded laser event may be analysed with reference to the time when the recorded laser event took place.

Accordingly, an ordinary image sensor designed for taking photographs may be used to detect the laser instead of more costly dedicated laser detection hardware. A threshold number of pixels may be set for the extent of immediately adjacent saturated pixels in a row direction of the pixels, and a threshold number of pixels may be set for the extent of immediately adjacent saturated image pixels in a column direction of the pixels, and the processing unit may be configured to identify that the image sensor is being illuminated by a laser when both the threshold numbers are exceeded for an area of adjacent saturated pixels.
Preferably, the column is taken at the centre of the extent of immediately adjacent saturated image pixels in the row direction. The two threshold numbers may be the same number, since a genuine laser event would be expected to produce an area of saturated pixels having a height similar to its width.
If more than one area of the image comprises saturated image pixels, then the largest area of saturated image pixels may be selected as the area to be used for a laser event recording.
Advantageously, the at least one characteristic feature of the laser may comprise the wavelength of the laser. Then, recorded laser events may be analysed according to wavelength to identify certain types of laser devices and assist in identifying whether a particular laser event could be attributed to a particular person/device. The wavelength of the laser may be recorded in terms of the colour of the laser, for example Red, Green, or Blue, depending on how accurately the laser event recorder can distinguish different wavelengths from one another.

The processing unit may be configured to disregard apparent laser events of certain wavelengths if the certain wavelengths are known to be unlikely to have originated from a laser, for example if the wavelengths correspond to those of sunlight. Then, incorrect recordings of laser events may be minimised. This may be particularly advantageous if the laser event is identified according to saturation of image sensor pixels, since pointing the laser event recorder directly at the sun is likely to result in saturation of image sensor pixels.

Advantageously, the image sensor may comprise Red, Green, Blue pixels, and the processing unit may be configured to determine the ratio of light intensities recorded by Red, Green, Blue pixels around the periphery of the saturated pixels to measure the wavelength of the laser. Alternatively, if the image sensor has very good colour separation between Red, Green, Blue channels, for example if a 3-chip CCD image sensor is used, then only one of the channels may be saturated and the processing unit may be configured to record the wavelength as either Red, Green, or Blue depending upon which channel is saturated. Each pixel may for example be considered to be saturated if at least one of the RGB channels has a value within 5% of the maximum value that the channel can take.

The at least one characteristic feature of the laser may comprise the intensity of the laser that reaches the laser event recorder. Since high intensity light will tend to overspill to adjacent pixels from the pixels that the laser is incident upon, the intensity of the laser may be estimated according to how many image sensor pixels are driven into saturation, and according to the exposure time of the image. The exposure time is the time for which the image sensor pixels are exposed to incoming light to sense the light. The longer the exposure time, and the greater the intensity of the laser, the more image sensor pixels will become saturated by the laser. Upon detection of a laser incident, the estimated colour of the laser and the percentage of the image sensor pixels that are saturated may be displayed by the laser event recorder.

The laser event recorder may be configured to emit a warning if the intensity is estimated to be at dangerous levels. The laser intensity may also be used to identify certain types of laser devices and assist in identifying whether a particular laser event could be attributed to a particular person/device.

Advantageously, the laser event recorder may be configured to send a request to the central server for information on previously recorded laser events at a current location of the laser event recorder, the request including the current location. Then, the laser event recorder may use the information to warn the user of the laser event recorder of what (if any) laser events have previously been recorded at that location.

The laser event recorder may be configured to send the request at regular locational intervals, for example to receive regular updates on any laser events, or may be configured to send the request in response to the identification, for example to receive further information on the likely type of laser that has been identified. The use of the central server enables the provision of up-to-date information, which may not have been available at an earlier time such as when the laser event recorder was first manufactured or most recently updated.

The laser event recorder may for example be a smartphone that has been configured as a laser event recorder by appropriate software.

Advantageously, the laser event recorder may be configured to take a photograph using the image sensor in response to the identification. Then, the photograph may be analysed to help identify the source of the laser. Preferably, the laser event recorder is configured to send the photograph to the central server as part of the recorded laser event.

Preferably, the laser event recorder is configured to automatically send the recorded laser event to the central server in response to the identification, so that the user of the laser event recorder is not unnecessarily distracted from the other tasks they are performing, such as piloting an airplane.

The central server is typically fixed at a permanent location, remote from the laser event recorder. Sending a pointer to the central server of where a particular laser event record may be found is considered to constitute sending the laser event record to the central server.

The laser event recorder may automatically send a recorded laser event to the central server in response to recording the laser event, to avoid distracting a user of the laser event recorder and to enable autonomous use of the laser event recorder.

The recorded laser event may be sent by the laser event recorder with authentication information to authenticate the validity of the recorded laser event to the central server.

The laser event recorder may be configured to establish a wireless network with further laser event recorders in the close vicinity, for example using a protocol such as Bluetooth. The laser event recorders may work co-operatively to extend the field of coverage of the laser event recorders.

Advantageously, an add-on lens may be provided to extend the field of view of the laser event recorder, or to enable more accurate recording of the laser event. For example, the add-on lens may comprise a grating which spreads the light out across a region of the image sensor according to wavelength, and so allows the wavelength of the laser to be more accurately determined by sensing whereabouts on the image sensor the image pixels are driven into saturation. This could allow determination of multiple wavelength laser attacks. The add-on lens is preferably repeatedly removable and attachable to the laser event recorder so that it can be attached or removed as required.

The laser event recorder may be suitable for mounting to various entities, for example aircraft, ground vehicles, boats, humans etc.

The laser event recorder may be an aircraft laser event recorder that is configured to send the recorded laser event to a central server controlled by an aircraft authority.

The wireless transceiver of the aircraft laser event recorder may be configured to send the recorded laser event to the central server via a mobile phone base station provided within an aircraft.

The aircraft laser event recorder may comprise a mounting device for mounting the aircraft laser event recorder in an aircraft cockpit, so that it can be easily picked up by the pilot, directed towards any lasers that are seen by the pilot, and thereafter replaced in the mounting device.

The aircraft laser event recorder may be configured to emit a sound corresponding to the severity of the identified laser, to give the pilot immediate feedback if the laser is likely to be dangerous to the plane and/or pilot without the pilot needing to visually focus on the laser event recorder which would probably be more distracting to the pilot. Other aircraft-specific features may also be provided to the aircraft laser event recorder.

A person with a laser device may for example set themselves up at a particular location and direct the laser at any planes passing overhead during a period of time. One advantage of laser event recorders being configured to send recorded laser events to a central server, is that surrounding laser event recorders surrounding a given laser event recorder may be immediately informed by the central server of a laser event that is identified by the given laser event recorder, thereby giving advance warning to the surrounding laser event recorders (and therefore their users) that a person is operating a laser device in the area and directing it towards planes.

According to a second aspect of the invention, there is provided an application software for configuring a smartphone as a laser event recorder according to the first aspect of the invention. The application software may be supplied in a signal, or stored on a computer readable storage media.

The provision of an application software which can be installed on the smartphone to convert the smartphone to a laser event recorder makes the laser event recorder more easily accessible to those who need it, at a significant reduction in cost, and without the need to purchase and carry around specialist equipment.

The application software may for example be supplied to the smartphone within a signal transmitted to the smartphone, or via a computer-readable storage media such as a memory card.

The application software may be a software "app", for example to configure a smartphone such as an Apple™ iPhone™ as a laser event recorder according to the first aspect of the invention.

According to a third aspect of the invention, there is provided a laser event recording system comprising a laser event recorder and a central server according to the first aspect of the invention.

The central server may be configured to maintain a database of recorded laser events.

Advantageously, the central server may be configured to transmit laser event information to the laser event recorder.

The laser event information may be based upon the database of recorded laser events, and comprise information on previously recorded laser events at the current location of the laser event recorder. The current location of the laser event recorder may for example be specified in a recorded laser event from the laser event recorder, or in a request from the laser event recorder.

The laser event information may be sent in response to receiving a recorded laser event from the laser event recorder. The laser event information may for example include results of analysis carried out by the central server on a recorded laser event received from the laser event recorder.

The laser event information may be sent in response to a request from the laser event recorder. The laser event information may for example include information on previously recorded laser events at the current location of the laser event recorder, the current location being specified in the request.

The laser event recording system may comprise a plurality of the laser event recorders, each one of the plurality of laser event recorders being configured to send recorded laser events to the same central server.

According to a fourth aspect of the invention, there is provided a central server configured to maintain a database of recorded laser events, and to transmit laser event information to a laser event recorder, the laser event information being based upon at least one of the database of recorded laser events and an analysis of a recorded laser event that has been sent to the central server by the laser event recorder of the first aspect of the invention.

The central server may enable real-time analysis of a laser event and provide immediate feedback to a user of a laser event recorder, by the central server receiving a recorded laser event from the laser event recorder, and sending analysis results back to the laser event recorder as laser event information. The analysis may for example take into account recorded laser events that were recorded by other laser event recorders at, the same location a few minutes/hours beforehand.

The analysis results may comprise estimates of the distance to the laser, for example by the central server analysing a laser event and estimating the distance to the laser from the characteristic features of the laser and/or from topographical maps of terrain and buildings. Laser power may also be estimated based upon the distance and the weather conditions at the time and location of the laser attack. In particular, a laser beam passing through air can be absorbed or scattered by weather conditions such as rain, snow, or fog, which the central server may take into account by accessing meteorological data.

The central server may be configured to transmit the laser event information to the laser event recorder. in response to a request from the laser event recorder.

The central server may be configured to compare the location of the laser event recorder to the locations of previously recorded laser events stored in the database, and transmit laser event information to the laser event recorder that indicates to the laser event recorder when the laser event recorder is entering an area having a high incidence of laser events. The laser event recorder may be configured to emit a visual/auditory warning when the laser event information indicates that the laser event recorder is entering such an area.

In the case of an aircraft laser event recorder, the laser event information sent to the aircraft laser event recorder by the central server may include navigational advice for avoiding nearby areas in which laser events have been recorded.

For example, a first aircraft equipped with a first aircraft laser event recorder may record a laser event and send it to the central server, and a second aircraft equipped with a second aircraft laser event recorder and flying at least a minute or two behind the first aircraft may receive a warning of the recorded laser event from the central server, so that the pilot of the second aircraft has the ability to avoid the area of the laser event recorded by the first aircraft event recorder and/or to be prepared for a laser event. A pilot may for example prepare for a laser event by putting on glasses/goggles configured to filter out the wavelength of the laser detected by the first aircraft laser event recorder, the pilot being informed of the wavelength of the laser (e.g. Red) in the warning.

The central server may be configured to identify patterns in the recorded laser events, for example the times and locations of recorded laser events, for the purposes of directing law enforcement officers to where the recorded lasers may be originating from.

Furthermore, upon receiving a plurality of recorded laser events from the same location over a short timescale, for example one hour, the central server may be configured to signal a laser attack and provide the location of where the plurality of recorded laser events were recorded for the purpose of directing law enforcement officers to that location.

If the recorded laser events comprise photographs of the laser events then the central processing unit may be configured to supply these when signalling a laser attack, and may perform analysis on the photographs to help narrow down the location within which the lasers may have originated.

### Brief Description of the Drawings

Embodiments of the invention will now be described by way of example only and with reference to the accompanying drawings, in which:
Fig. 1 shows a schematic diagram of a laser event recording system according to an embodiment of the invention; and
Fig. 2 shows a schematic diagram of a laser event recorder used in the embodiment of Fig. 1.

The drawings are for illustrative purposes only and are not to scale.

### Detailed Description

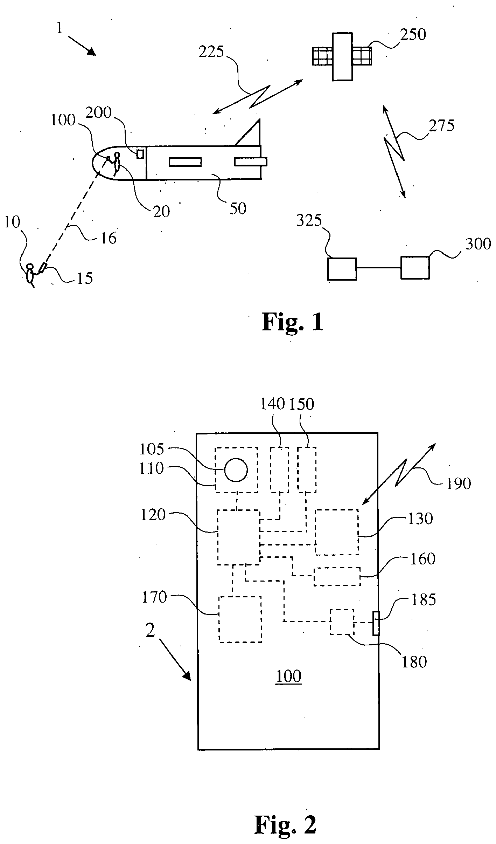

An embodiment of the invention will now be described with reference to the schematic diagram of Fig. 1, which shows a laser event recording system 1.

The laser event recording system 1 comprises a laser event recorder in the form of a smartphone 100, a mobile phone base station 200 for wirelessly communicating with the smartphone 100, a satellite 250 for communicating 225 with the mobile base station 200, a central server 300 for communicating 275 with the satellite 250, and a PC terminal 325 for communicating with the central server 300. Fig. 1 also shows an attacker 10 pointing a laser 16 at an aircraft 50 using a laser pointer 15, and a pilot 20 of the aircraft 50 recording the laser 16 with the smartphone 100.

The smartphone 100 identifies that it is being illuminated by the laser 16, and records a laser event comprising the location and orientation of the smartphone 100, the colour and intensity of the laser 16, and a photograph of the laser 16 taken whilst the smartphone 100 was being illuminated by the laser 16. The smartphone 100 automatically sends the recorded laser event to the mobile base station 200, and the mobile base station 200 sends the recorded laser event to the central server 300 via the satellite 250. The recorded laser event is sent with authentication information to authenticate the recorded laser event to the central server.

The central server 300 receives the recorded laser event, analyses the recorded laser event, and stores the recorded laser event in a database of recorded laser events. The analysis comprises determining an estimated location of the laser pointer 15, based upon the location and orientation of the smartphone 100, and map relief data. The analysis may also take into account the photograph. The analysis also comprises comparing the recorded intensity of the laser 16 to meteorological data in order to assess whether the laser 16 may have been attenuated by cloud and/or fog, and therefore whether the laser 16 may be from a laser pointer 15 having a higher power than the laser 16 suggests.

The central server compares the estimated location, power, and wavelength of the laser pointer 15 to the database of previously recorded laser events, and may refine the estimates according to previously recorded laser events, for example according to previously recorded laser events that were recorded a few minutes beforehand by the same laser event recorder or by other laser event recorders, or according to previously recorded laser events that were recorded in a similar location to the estimated location. If the analysis suggests the laser 16 may have been from a laser pointer 15 having a higher power than the laser 16 suggests due to meteorological data, then this may be taken into account when refining the estimates.

The central server then sends laser event information back to the smartphone 100 via the satellite 250 and mobile base station 200. The laser event information includes the estimates of the location, power, and wavelength of the laser pointer 15, for example the analysis results estimates or the refined estimates. The laser event information also includes information on previously recorded laser events at the location of the smartphone 100, the location having been included in the recorded laser event. The information on previously recorded laser events may for example include average wavelength of laser events, average power of laser events, most common type of laser event, highest power laser event recorded at that location. The smartphone 100 may display the laser event information on a screen, or more preferably give an audible summary of the laser event information.

The smartphone 100 periodically sends requests to the central server 300 for information on previously recorded laser events at the current location of the laser event recorder, the request including the current location. The central server 300 responds to these requests by sending laser event information to the smartphone 100, the laser event information including for example the average incidence of previously recorded laser events at that location, or navigational advice for avoiding any areas in which recorded laser events have very recently been received.

The central server 300 is connected to the PC terminal 325, and the PC terminal 325 is used to help administer the database of recorded laser events at the central server 300 and to monitor the incoming recorded laser events. The PC terminal 325 may display summaries of most recently recorded laser events and/or provide warnings when particularly high-power laser events occur or when multiple laser events occur in one area over short time duration.

The smartphone 100 will now be described in more detail with reference to the schematic diagram of Fig. 2. The smartphone 100 comprises a lens 105, an image sensor 110 for sensing the light from the lens, and a processing unit 120 for processing the signals from the image sensor.

The smartphone also comprises a wireless transceiver 130 for communicating with mobile phone base stations, a GPS receiver 140 for determining the location of the smartphone 100, a compass 150 for determining an orientation of the smartphone 100, a Bluetooth transceiver 160 for communicating with other Bluetooth capable devices, a display driver 170 for displaying information on a screen (not shown for clarity) of the smartphone 100, and an amplifier 180 for giving audible output via a speaker 185.

The image sensor comprises an array of RGB image sensor pixels, and the compass comprises one or more magnetic sensors. The processing unit 120 typically comprises one or more integrated circuits of the smartphone 100, the integrated circuits including a processor core and a memory.

The smartphone 100 receives an application software (an app) within a wireless signal 190, and the application software configures the smartphone 100 as a laser event recorder. In particular, the processing unit 120 is configured by the application software to make the smartphone 100 operate as a laser event recorder.

In use, the image sensor 110 is illuminated by a laser through the lens 105, either when the smartphone is being held in a mount, or being held by a person pointing the smartphone towards the laser. The high power per unit area of the laser drives the image sensor pixels that are impacted by the laser into saturation, as well as nearby image sensor pixels which saturate due to charge overspill from the image sensor pixels that are impacted by the laser, and/or due to reflected or scattered portions of the laser as it passes through the lens 105 to the image sensor 110.

The processing unit 120 continually checks for areas of saturated image pixels, and identifies the area of saturated image pixels caused by the laser. The processing unit 120 analyses the pixels around the periphery of the saturated pixels and compares the relative strengths of the signals from R, G, B pixels in order to determine the wavelength of the light. The processing unit 120 checks whether the wavelength corresponds to that of sunlight, for example roughly equal signal strengths from the R,G,B pixels. If the wavelength does not correspond to that of sunlight, then the processing unit 120 identifies that image sensor is being illuminated by a laser and initiates the recording of a laser event.

The wavelength of the laser and an intensity corresponding to the area of the saturated image pixels are recorded as characteristic features of the laser in the laser event recording. The estimated colour of the laser and the percentage of pixels saturated are displayed at the top of the screen by the display driver 170.

There are various ways in which the processing unit 120 may search for areas of saturated image pixels, although in this particular embodiment a 1280 column x 720 row frame is first captured by the image sensor 110, and then every fifth pixel on every fifth row is analysed for saturation. This reduces the problem to a matrix of 256 x 144 = 36,864 pixels which each have their RGB (Red, Green, Blue) components analysed to see if they reach a user-specified saturation value.

A completely saturated pixel on an RGB image sensor that uses 8 bits per colour channel will have all colour channels at a value of 255, but in order to increase the detection sensitivity this value may be slightly lowered such that the pixel is considered to be saturated if at least one of the RGB channels has a value of 243, i.e. is within 5% of the maximum value of 255.

Once a pixel is found which meets the specified saturation limit, all adjacent pixels in the row direction of the captured frame are analysed to determine the extent of the saturation in the row direction. If this extent exceeds a threshold number of pixels, then the number of saturated pixels in the column direction (at the middle of the extent of saturation in the row direction) is analysed to determine if the threshold number is also exceeded in the column direction.

If the threshold number is exceeded in both row and column directions, then a laser event is recorded. Requiring greater than a threshold number of image pixels to be saturated in both row and column directions before recording a laser event helps to reduce false detections from other sources that could saturate pixels, such as scene lighting and also the sun.

The RGB values of the pixels in the column that runs through the middle of the extent of saturation in the row direction running are then averaged to give an indication of the colour of the laser, the averaging along the column causing the pixels around the periphery of the saturated pixels to be checked to determine the colour of the laser.

If, for example, the average green value exceeds the average red and blue values by a specified percentage, then the colour of the incident is declared to be green.

The percentage of the image sensor pixels that are saturated are stored by the processing unit 120 as a characteristic feature of the laser within the laser event recording. The processing unit 120 uses the exposure time of the captured frame to determine the intensity of the laser, based upon the percentage of saturated image pixels within the frame.

The processing unit 120 stores the data from the image sensor pixels as a photograph of the laser, and includes the photograph as showing characteristic features of the laser in the laser event recording. The processing unit 120 stores the location from the GPS sensor 140 and the orientation from the compass 150 as showing characteristic features of the laser since these may be used to help determine where the laser originated from.

The processing unit 120 also stores the time when the laser was identified as one of the characteristic features of the laser in the laser event recording. The processing unit 120 also uses a change in the GPS location that occurs over a short timespan, for example 1 second, to determine the heading of the laser event recorder, and includes the heading as part of the laser event recording.

Next, the processing unit 120 sends the recorded laser event to the central server 300 using the wireless transceiver 130, and awaits analysis results from the central server 300. The central server 300 sends laser event information including the analysis results to the smartphone 100, and the smartphone 100 displays the results on the screen using the display driver 170, and/or gives an audible indication of the results using the amplifier 180 to drive the speaker 185.

Multiple laser event recordings of the same laser event over the duration of the laser event may be analysed by the central server 300, for example to help identify the location of the laser pointer 15 using triangulation of the locations in the multiple laser event recordings.

Laser event information is also received at the smartphone 100 in response to periodic requests made by the smartphone to the central server 300, for example requests made every time the smartphone 100 is moved into a new area or every time a given time period has elapsed since the last request was sent, and the smartphone displays or audibly indicates the laser event information to the user.

The smartphone 100 provides the user of the smartphone with the option to establish a wireless network with further smartphones 100 in the close vicinity using the Bluetooth transceiver 160. The smartphones 100 work co-operatively to extend the field of coverage over which laser events may be recorded.

The field of coverage may alternatively or additionally be extended by the provision of an add-on lens adapted for the smartphone. The add-on lens (not shown in Figs) is configured to fit over the lens 105 and effectively extend the viewing angle of the lens 105. The add-on lens may alternatively or additionally comprise a grating which spreads the light out across a region of the image sensor according to the wavelength of the incoming light, and so allows the wavelength of the laser to be more accurately .determined by sensing whereabouts on the image sensor the image pixels are driven into saturation.

The scope of the invention is defined by the appended claims. Further embodiments falling within the scope of the appended claims will also be apparent to those skilled in the art. For example, instead of communicating with the central server 300 via the a mobile phone base station 200, the laser event recorder may communicate with the central server 300 directly via the satellite 250, or the laser event recorder may even communicate directly to the central server 300. The other features appearing in the illustrated embodiment but not forming part of the independent claims may also be omitted in various embodiments. The laser event recorder 100 may be a dedicated laser event recorder instead of a smartphone.

Triangulation algorithms could be used to estimate the location of the laser source itself. This may involve use of the smartphone's GPS coordinates and heading, together with the size and range of known objects within the scene captured within an image.

One embodiment of the invention could be to augment existing black box' data recording capabilities such as those within commercial aircraft. Recorded data from the device could be sent to a black box recording device which, in the event of an incident or accident, could provide evidence for subsequent investigations.

## Claims

1. A laser event recorder comprising an image sensor, a processing unit coupled to the image sensor, and a wireless transceiver coupled to the processing unit, wherein the processing unit is configured to:
- identify when the image sensor is illuminated by a laser when a predetermined number of adjacent image sensor pixels are saturated;
- in response to the identification, record a laser event comprising at least one characteristic feature of the laser; and
- send the recorded laser event to a central server using the wireless transceiver.

2. The laser event recorder of claim 1, wherein the laser event recorder further comprises a navigational positioning system receiver, and wherein the processing unit is configured to store a location determined by the navigational positioning system receiver at the time of the identification as part of the recorded laser event.

3. The laser event recorder of claim 1 or 2, wherein the laser event recorder further comprises a compass capability, and wherein the processing unit is configured to store a heading determined by the compass capability at the time of the identification as part of the recorded laser event.

4. The laser event recorder of claim 1, 2 or 3, wherein the processing unit is configured to identify that the image sensor is being illuminated by a laser when an area of adjacent image sensor pixels that are saturated comprises greater than a threshold number of image sensor pixels in a row direction of the image sensor pixels and greater than the threshold number of image sensor pixels in a column direction of the image sensor pixels.

5. The laser event recorder of claim 1, 2, 3 or 5, wherein the processing unit is configured to estimate an intensity of the laser based upon the number of adjacent image sensor pixels that are saturated and an exposure time of the image sensor, and to record the laser event to include the estimated intensity of the laser as a characteristic feature of the laser.

6. The laser event recorder of any preceding claim, wherein the image sensor comprises Red, Green, Blue pixels, and wherein the processing unit is configured to determine the ratio of light intensities recorded by Red, Green, Blue pixels around the periphery of the saturated pixels to determine a colour or wavelength of the laser, and to record the laser event to include the colour or wavelength of the laser as a characteristic feature of the laser.

7. The laser event recorder of any preceding claim, wherein the laser event recorder is configured to send a request to the central server for information on previously recorded laser events at a current location of the laser event recorder, the request including the current location.

8. The laser event recorder of claim 7, wherein the laser event recorder is configured to send the request in response to the identification.

9. The laser event recorder of any preceding claim, wherein the laser event recorder is a smartphone.

10. An application software for configuring a smartphone as the laser event recorder of any preceding claim, wherein the smartphone comprises a lens, an image sensor, a processing unit, a wireless transceiver and a GPS receiver.

11. A laser event recording system comprising the laser event recorder and the central server of any one of claims 1 to 10.

12. The laser event recording system of claim 11, wherein the central server is configured to transmit laser event information to the laser event recorder.

13. The laser event recording system of claim 12, wherein the central server is configured to maintain a database of recorded laser events, and wherein the laser event information comprises information on previously recorded laser events at the current location of the laser event recorder.

14. The laser event recording system of claim 12 or 13, wherein the central server is configured to analyse the recorded laser event sent from the laser event recorder, and wherein the laser event information comprises results of the analysis.

15. A central server configured to maintain a database of recorded laser events, and to transmit laser event information to a laser event recorder, the laser event information being based upon at least one of the database of recorded laser events and an analysis of a recorded laser event that has been sent to the central server by the laser event recorder of any one of claims 1 to 9.

## Patentansprüche

1. Laserereignis-Aufzeichnungsgerät, das einen Bildsensor, eine mit dem Bildsensor gekoppelte Verarbeitungseinheit und einen mit der Verarbeitungseinheit gekoppelten drahtlosen Transceiver aufweist, wobei die Verarbeitungseinheit ausgebildet ist zum:
- Identifizieren, dass der Bildsensor durch einen Laser bestrahlt wird, wenn eine vorgegebene Anzahl von benachbarten Bildsensorpixeln gesättigt ist;
- Aufzeichnen eines Laserereignisses, das zumindest ein charakteristisches Merkmal des Lasers umfasst, in Reaktion auf die Identifizierung; und
- Senden des aufgenommenen Laserereignisses an einen zentralen Server unter Verwendung des drahtlosen Transceivers.

2. Laserereignis-Aufzeichnungsgerät nach Anspruch 1, wobei das Laserereignis-Aufzeichnungsgerät ferner einen Navigations-Positionsbestimmungssystemempfänger aufweist und wobei die Verarbeitungseinheit ausgebildet ist, eine Position zu.speichern, die von dem Navigations-Positionsbestimmungssystemempfänger zum Zeitpunkt der Identifizierung als Teil des aufgezeichneten Laserereignisses bestimmt wird.

3. Laserereignis-Aufzeichnungsgerät nach Anspruch 1 oder 2, wobei das Laserereignis-Aufzeichnungsgerät ferner eine Kompassfunktion aufweist und wobei die Verarbeitungseinheit ausgebildet ist, eine Richtung zu speichern, die von der Kompassfunktion zum Zeitpunkt der Identifizierung als Teil des aufgezeichneten Laserereignisses bestimmt wird.

4. Laserereignis-Aufzeichnungsgerät nach Anspruch 1, 2 oder 3, wobei die Verarbeitungseinheit ausgebildet ist, zu identifizieren, dass der Bildsensor von einem Laser bestrahlt wird, wenn ein Bereich von benachbarten Bildsensorpixeln, die gesättigt sind, mehr als eine Mindestanzahl von Bildsensorpixeln in einer Richtung der Reihen der Bildsensorpixel und mehr als eine Mindestanzahl von Bildsensorpixeln in einer Richtung der Spalten der Bildsensorpixel aufweist.

5. Laserereignis-Aufzeichnungsgerät nach Anspruch 1, 2, 3 oder 4, wobei die Verarbeitungseinheit ausgebildet ist, auf Basis der Anzahl von benachbarten Bildsensorpixeln, die gesättigt sind, und einer Belichtungszeit des Bildsensors eine Laserintensität zu schätzen und das Laserereignis einschließlich der geschätzten Intensität des Lasers als ein charakteristisches Merkmal des Lasers aufzuzeichnen.

6. Laserereignis-Aufzeichnungsgerät nach einem der vorhergehenden Ansprüche, wobei der Bildsensor rote, grüne und blaue Pixel umfasst und wobei die Verarbeitungseinheit ausgebildet ist, das Verhältnis der von den roten, grünen und blauen Pixeln um die Peripherie der gesättigten Pixel aufgezeichneten Lichtintensitäten zu bestimmen, um eine Farbe oder Wellenlänge des Lasers zu ermitteln, und das Laserereignis einschließlich der Farbe oder Wellenlänge des Lasers als ein charakteristisches Merkmal des Lasers aufzuzeichnen.

7. Laserereignis-Aufzeichnungsgerät nach einem der vorhergehenden Ansprüche, wobei das Laserereignis-Aufzeichnungsgerät ausgebildet ist, eine Anfrage nach Informationen über früher aufgezeichnete Laserereignisse an einem aktuellen Standort des Laserereignis-Aufzeichnungsgeräts an den zentralen Server zu senden, wobei die Anfrage den aktuellen Standort umfasst.

8. Laserereignis-Aufzeichnungsgerät nach Anspruch 7, wobei das Laserereignis-Aufzeichnungsgerät ausgebildet ist, die Anfrage in Reaktion auf die Identifizierung zu senden.

9. Laserereignis-Aufzeichnungsgerät nach einem der vorhergehenden Arisprüche, wobei es sich bei dem Laserereignis-Aufzeichnungsgerät um ein Smartphone handelt.

10. Anwendungssoftware zum Konfigurieren eines Smartphones als Laserereignis-Aufzeichnungsgerät nach einem der vorhergehenden Ansprüche, wobei das Smartphone eine Linse, einen Bildsensor, eine Verarbeitungseinheit, einen drahtlosen Transceiver und einen GPS-Empfänger umfasst.

11. Laserereignis-Aufzeichnungssystem, das das Laserereignis-Aufzeichnungsgerät und den zentralen Server nach einem der Ansprüche 1 bis 10 umfasst.

12. Laserereignis-Aufzeichnungssystem nach Anspruch 11, wobei der zentrale Server ausgebildet ist, Laserereignis-Informationen an das Laserereignis-Aufzeichnungsgerät zu übermitteln.

13. Laserereignis-Aufzeichnungssystem nach Anspruch 12, wobei der zentrale Server ausgebildet ist, eine Datenbank von aufgezeichneten Laserereignissen zu unterhalten, und wobei die Laserereignis-Informationen Informationen über früher aufgezeichnete Laserereignisse an dem aktuellen Standort des Laserereignis-Aufzeichnungsgeräts umfassen.

14. Laserereignis-Aufzeichnungssystem nach Anspruch 12 oder 13, wobei der zentrale Server ausgebildet ist, das von dem Laserereignis-Aufzeichnungsgerät übermittelte Laserereignis zu analysieren und wobei die Laserereignis-Informationen die Ergebnisse der Analyse umfassen.

15. Zentraler Server, der ausgebildet ist, eine Datenbank aufgezeichneter Laserereignisse zu unterhalten und Laserereignis-Informationen an ein Laserereignis-Aufzeichnungsgerät zu übermitteln, wobei die Laserereignis-Informationen auf der Datenbank aufgezeichneter Laserereignisse und/oder einer Analyse eines aufgezeichneten Laserereignisses basieren, das von dem Laserereignis-Aufzeichnungsgerät nach einem der Ansprüche 1 bis 9 an den zentralen Server gesendet wurde.

## Revendications

1. Enregistreur d'événements laser comprenant un capteur d'image, une unité de traitement couplée au capteur d'image, et un émetteur-récepteur sans fil couplé à l'unité de traitement, dans lequel l'unité de traitement est configurée pour :
- identifier quand le capteur d'image est éclairé par un laser lorsqu'un nombre prédéterminé de pixels de capteur d'image adjacents sont saturés ;
- en réponse à l'identification, enregistrer un événement laser comprenant au moins un attribut caractéristique du laser ; et
- envoyer l'événement laser enregistré à un serveur central en utilisant l'émetteur-récepteur sans fil.

2. Enregistreur d'événements laser selon la revendication 1, dans lequel l'enregistreur d'événements.laser comprend en outre un récepteur de système de positionnement de navigation, et dans lequel l'unité de traitement est configurée pour stocker une localisation déterminée par le récepteur de système de positionnement de navigation au moment de l'identification comme partie de l'événement laser enregistré.

3. Enregistreur d'événements laser selon la revendication 1 ou 2, dans lequel l'enregistreur d'événements laser comprend en outre une capacité de boussole, et dans lequel l'unité de traitement est configurée pour stocker un cap déterminé par la capacité de boussole au moment de l'identification comme partie de l'événement laser enregistré.

4. Enregistreur d'événements laser selon la revendication 1, 2 ou 3, dans lequel, l'unité de traitement est configurée pour identifier que le capteur d'image est éclairé par un laser lorsqu'une zone de pixels de capteur d'image adjacents qui sont saturés comprend plus d'un nombre seuil de pixels de capteur d'image dans une direction de ligne des pixels de capteur d'image et plus du nombre seuil de pixels de capteur d'image dans une direction de colonne des pixels de capteur d'image.

5. Enregistreur d'événements laser selon la revendication 1, 2, 3 ou 5, dans lequel l'unité de traitement est configurée pour estimer une intensité du laser sur la base du nombre de pixels de capteur d'image adjacents qui sont saturés et d'un temps d'exposition du capteur d'image, et pour enregistrer l'événement laser pour inclure l'intensité du laser estimée comme un attribut caractéristique du laser.

6. Enregistreur d'événements laser selon l'une quelconque des revendications précédentes, dans lequel le capteur d'image comprend des pixels Rouges, Verts, Bleus, et dans lequel l'unité de traitement est configurée pour déterminer le rapport d'intensités lumineuses enregistrées par des pixels Rouges, Verts, Bleus autour de la périphérie des pixels saturés pour déterminer une couleur ou une longueur d'onde du laser, et pour.enregistrer l'événement laser pour inclure la couleur ou la longueur d'onde du laser comme un attribut caractéristique du laser.

7. Enregistreur d'événements laser selon l'une quelconque des revendications précédentes, dans lequel l'enregistreur d'événements laser est configuré pour envoyer une demande au serveur central pour des informations sur des événements laser enregistrés précédemment au niveau d'une localisation actuelle de l'enregistreur d'événements laser, la demande comprenant la localisation actuelle.

8. Enregistreur d'événements laser selon la revendication 7, dans lequel l'enregistreur d'événements laser est configuré pour envoyer la demande en réponse à l'identification.

9. Enregistreur d'événements laser selon l'une quelconque des revendications précédentes, dans lequel l'enregistreur d'événements laser est un smartphone.

10. Logiciel d'application pour configurer un smartphone comme l'enregistreur d'événements laser selon l'une quelconque des revendications précédentes, dans lequel le smartphone comprend un objectif, un capteur d'image, une unité de traitement, un émetteur-récepteur sans fil et un récepteur GPS.

11. Système d'enregistrement d'événements laser comprenant l'enregistreur d'événements laser et le serveur central selon l'une quelconque des revendications 1 à 10.

12. Système d'enregistrement d'événements laser selon la revendication 11, dans lequel le serveur central est configuré pour transmettre des informations d'événement laser à l'enregistreur d'événements laser.

13. Système d'enregistrement d'événements laser selon la revendication 12, dans lequel le serveur central est configuré pour maintenir une base de données d'événements laser enregistrés, et dans lequel les informations d'événement laser comprennent des informations sur des événements laser enregistrés précédemment au niveau de la localisation. actuelle de l'enregistreur d'événements laser.

14. Système d'enregistrement d'événements laser selon la revendication 12 ou 13, dans lequel le serveur central est configuré pour analyser l'événement laser enregistré envoyé depuis l'enregistreur d'événements laser, et dans lequel les informations d'événement laser comprennent des résultats de l'analyse.

15. Serveur central configuré pour maintenir une base de données d'événements laser enregistrés, et pour transmettre des informations d'événements laser à un enregistreur d'événements laser, les informations d'événement laser étant basées sur au moins une de la base de données d'événements laser enregistrés et d'une analyse d'un événement laser enregistré qui a été envoyé au serveur central par l'enregistreur d'événements laser selon l'une quelconque des revendications 1 à 9.
